**Europäisches Patentamt**

**European Patent Office**

**Office européen des brevets**

(19)

(11) Veröffentlichungsnummer: **0 054 780**
**B1**

(12)

# EUROPÄISCHE PATENTSCHRIFT

(45) Veröffentlichungstag der Patentschrift:
**29.01.86**

(21) Anmeldenummer: **81110112.0**

(22) Anmeldetag: **03.12.81**

(51) Int. Cl.⁴: **B 32 B 1/00,** F 24 D 3/00,
E 04 F 15/18

(54) **Wärmedämmendes Unterlagselement für Fussbodenheizungen.**

(30) Priorität: **22.12.80 CH 9449/80**

(43) Veröffentlichungstag der Anmeldung:
**30.06.82 Patentblatt 82/26**

(45) Bekanntmachung des Hinweises auf die Patenterteilung:
**29.01.86 Patentblatt 86/5**

(84) Benannte Vertragsstaaten:
**AT BE CH DE FR GB IT LI LU NL SE**

(56) Entgegenhaltungen:
**CH - A - 623 913**
**DE - A - 1 609 574**
**DE - A - 2 719 682**
**DE - A - 2 750 819**
**DE - A - 2 809 961**
**DE - A - 2 827 333**
**DE - U - 7 902 377**

(73) Patentinhaber: **Werner, Beat E., Zipfelstrasse 11,
CH-8302 Kloten (CH)**

(72) Erfinder: **Werner, Beat E., Zipfelstrasse 11,
CH-8302 Kloten (CH)**

(74) Vertreter: **Patentanwälte Schaad, Balass & Partner,
Dufourstrasse 101 Postfach, CH-8034 Zürich (CH)**

## Beschreibung

Die vorliegende Erfindung betrifft eine wärmedämmende Unterlagsplatte für Fussbodenheizungen gemäss Oberbegriff des Anspruches 1.

Aus der DE-U 7 902 377 ist eine Unterlagsplatte dieser Art bekannt, die eine Reflexionsschicht aus Aluminium aufweist, welche unterhalb einer Deckschicht angeordnet ist, welche durch eine die Wärmestrahlung durchlassende Polyesterfolie gebildet ist. Die Deckschicht und die Reflexionsschicht sind miteinander direkt verbunden. Unterhalb der Reflexionsschicht ist eine weitere, der Trittschalldämmung dienende Schicht aus belastbarem Kunststoff, wie z.B. Styropor, angeordnet. Zum Befestigen von Heizrohren dienen Klammern, welche mittels Steckdornen in der Trittschalldämmschicht verankert sind und alle oberhalb der Trittschalldämmschicht angeordneten Schichten durchstossen.

Da die Reflexionsschicht mit der über dieser angeordneten Deckschicht in wärmeleitender Verbindung steht, hat diese Reflexionsschicht praktisch dieselbe Temperatur wie die Deckschicht und auch wie die auf letzterer aufliegenden Heizrohre. Wegen dieser Temperaturgleichheit der als Wärmestrahler wirkenden Heizrohre und der Reflexionsschicht kann sich eine grössere Wärmestrahlung nach oben nicht ausbilden. Die Reflexionsschicht hat daher in erster Linie die Funktion eines Wärmeleiters und sorgt für eine gleichmässige Wärmeverteilung über die Oberfläche der Unterlagsplatte.

Da die Klammern in der Trittschalldämmschicht verankert werden müssen, ist ein Durchstossen der oberhalb dieser Trittschalldämmschicht liegenden Schichten unvermeidlich. Die Steckdorne der metallischen Klammern wirken dabei als zusätzliche Wärmeleiter, welche die Heizrohre und die Reflexionsschicht miteinander verbinden.

Ausserdem ist aus der DE-A 2 841 208 eine Verbundfolie für eine Fussbodenheizung bekannt, welche von oben nach unten aus einer infrarotstrahlungsdurchlässigen Kunststoffolie, einer auf deren Unterseite aufgebrachten Aluminiumbeschichtung, einer Verbund- und Korrosionsschutzschicht, einer Kunststoffolie als Basis sowie einer weiteren Kunststoffolie als Träger besteht. Die unterste Kunststoffolie ist mit der Trittschalldämmung dienenden Luftkammern versehen. Auch bei dieser Verbundfolie ist die Reflexionsschicht mit der wärmestrahlungsdurchlässigen Deckschicht verbunden. Somit weist die Reflexionsschicht im wesentlichen dieselbe Temperatur auf wie die Deckschicht und der oberhalb der Verbundfolie angeordnete Estrich. Die Reflexionsschicht kann daher nur eine sehr bescheidene Reflexionswirkung ausüben. Diese bekannte Verbundfolie hat somit ebenfalls die vorstehend erwähnten Nachteile.

Zudem ist die erwähnte Verbundfolie aus Festigkeitsgründen nicht dazu geeignet, Rohrhalteelemente so zu halten, dass letztere beim Verlegen der Heizungsrohre nicht aus der Verbundfolie herausgerissen werden. Aus diesem Grunde müssen auf die Verbundfolie Flacheisen aufgelegt werden, auf denen die Rohrhalteelemente befestigt werden. Im übrigen ist es in der Regel notwendig, den Boden zuerst mit einer Isolationsschicht aus wärmedämmenden Platten, z.B. Polystyrolhartschaumplatten, abzudecken, bevor die Verbundfolie verlegt werden kann. Das Einbauen derartiger Fussbodenheizungen ist somit recht aufwendig.

Daneben ist aus der DE-A 2 750 819 ein zwei- oder mehrschichtiges Dämm-Material aus Kunststoff mit eingeschlossenen Gasschichten bzw. Gasblasen bekannt, bei dem die Gasschichten bzw. -blasen durch eine oder mehrere stark reflektierende Oberflächen begrenzt sind. Dieses Dämm-Material wird für die verschiedensten Anwendungen vorgeschlagen, u.a. auch für die Wärmedämmung im Bausektor. Um die Wirkung dieser stark reflektierenden Oberflächen überhaupt ausnützen zu können, ist dieses Dämm-Material immer so einzusetzen, dass seine eine Oberfläche in Berührung mit der Umgebungsluft steht. Wäre dem nicht so und hätte die reflektierende Oberfläche dieselbe Temperatur wie die Wärmestrahlungsquelle, so könnte keine nennenswerte Wärmereflexion stattfinden. Das bekannte Dämm-Material ist somit nicht für den Einsatz in Fussbodenheizungen vorgesehen.

Der vorliegenden Erfindung liegt nun die Aufgabe zugrunde, eine ein einfaches und zeitsparendes Einbauen erlaubende Unterlagsplatte der eingangs genannten Art zu schaffen, welche eine Wärmeabgabe der Heizungsrohre der Fussbodenheizung nach unten stärker zu vermindern gestattet als die bekannte Unterlagsplatte und die zudem ein rasches und wenig aufwendiges Anbringen von Rohrhalteelementen ermöglicht.

Diese Aufgabe wird erfindungsgemäss durch die Merkmale des kennzeichnenden Teils des Anspruches 1 gelöst.

Durch die Anordnung der einzelne, geschlossene, gasgefüllte Kammern aufweisenden weiteren Schicht oberhalb der Reflexionsschicht wird zwischen der Reflexionsschicht und den Heizungsrohren ein Gaspolster, d.h. vorzugsweise ein Luftpolster, gebildet, durch welches die Wärmeleitung von den Heizungsrohren zur Reflexionsschicht unterbrochen wird. Dadurch wird zwischen der Deckschicht und der Reflexionsschicht ein Temperaturunterschied erzeugt und damit zwei für eine Wärmereflexion notwendige Flächen mit unterschiedlicher Temperatur geschaffen, was erst eine wirkungsvolle Wärmereflexion durch die Reflexionsschicht ermöglicht. Somit wird eine Wärmeabgabe nach unten zumindest auf ein Mindestmass herabgesetzt.

Da die Deckschicht derart ausgebildet ist, dass die Rohrhalteelemente in ihr gehalten werden, ist es nicht wie bei der bekannten Unterlagsplatte erforderlich, zur Verankerung der Rohrhalteelemente alle Schichten zu durchstossen. Somit kann vermieden werden, dass über die Rohrhalteelemente doch noch eine wärmeleitende Verbindung zwischen Deckschicht und Reflexionsschicht gebildet wird.

Sind die Kammern der weiteren Schicht in einem gegenseitigen Abstand angeordnet, so werden durch die Deckschicht die zwischen diesen Kammern vorhandenen Zwischenräume ebenfalls abgeschlossen. Auf diese Weise werden weitere geschlossene, luftgefüllte Hohlräume erhalten, welche die Kammern in ihrer Wirkung unterstützen.

Vorzugsweise wird unterhalb der Reflexionsschicht eine mit dieser verbundene Grundschicht aus einem thermisch isolierenden Material angeordnet, welche zusätzlich zur Reflexionsschicht einem Wärmefluss nach unten entgegenwirkt. Durch das Verbinden der Grundschicht mit den darüberliegenden Schichten zu einer Einheit wird ein mechanisch widerstandsfähiges Bauelement erhalten, das sich leicht und rasch verlegen lässt. Die wärmedämmenden Unterlagsplatten können somit in einem einzigen Arbeitsgang auf die Tragkonstruktion, d.h. in der Regel auf den Betonboden, aufgelegt werden.

Es ist von Vorteil, wenn die Deckschicht wenigstens teilweise aus einem wärmeleitenden Material, z.B. Aluminium, besteht. Eine so ausgebildete Deckschicht übernimmt neben dem Festhalten der Rohrhalteelemente noch die weitere Aufgabe einer gleichmässigen Verteilung der von den Heizungsrohren abgegebenen Wärme über die gesamte Oberfläche der Unterlage.

Im folgenden wird anhand der Zeichnung ein Ausführungsbeispiel des Erfindungsgegenstandes näher erläutert. Es zeigt rein schematisch:

Fig. 1 perspektivisch eine wärmedämmende Unterlagsplatte für Fussbodenheizungen, und

Fig. 2 in Seitenansicht und in gegenüber der Fig. 1 vergrössertem Massstab einen Teil der Platte gemäss Fig. 1.

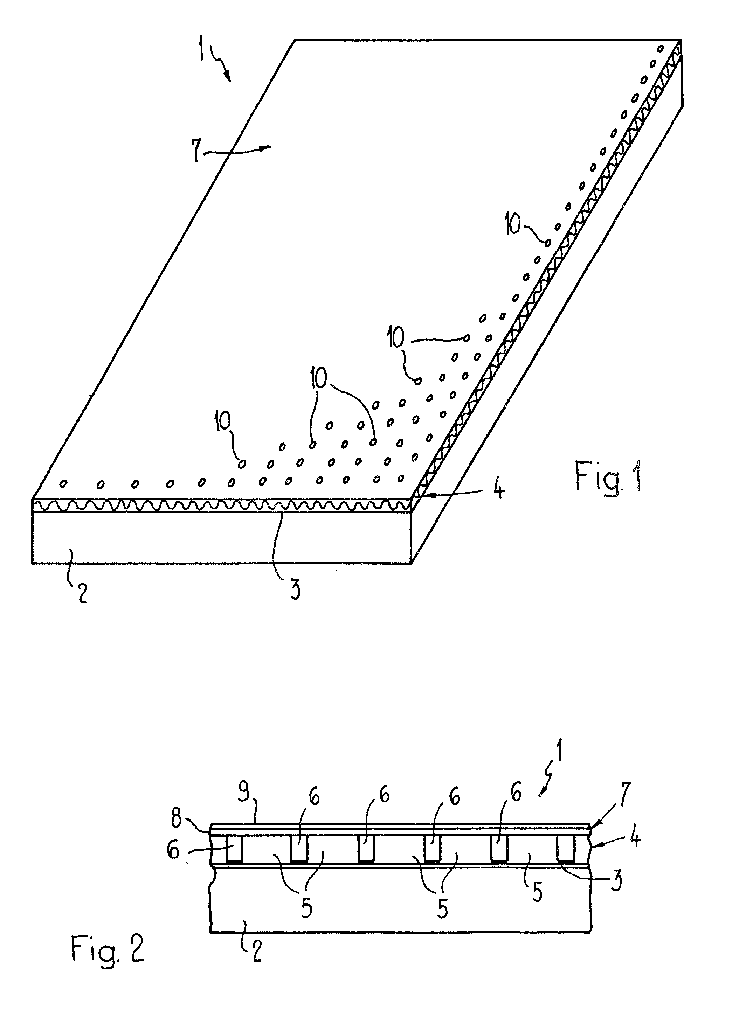

Anhand der beiden Figuren wird nun der Aufbau der Unterlagsplatte beschrieben. Der besseren Übersichtlichkeit halber sind in der Fig. 2 die einzelnen Schichten nicht in ihrem wahren Dikkenverhältnis gezeigt.

Die mit 1 bezeichnete Unterlagsplatte weist eine Grundschicht 2 aus einem wärmeisolierenden Material, z.B. aus Polystyrol, Polyuretan oder dgl. auf. Diese Isolationsgrundschicht 2 dient zur Wärmedämmung bzw. zum Verhindern von Wärmeverlusten gegen den darunterliegenden Betonboden. Oberhalb der Grundschicht 2 ist eine mit dieser verbundene Reflexionsschicht 3 angeordnet, die von einer Trittschalldämmschicht 4 überdeckt ist, die mit dieser Reflexionsschicht 3 ebenfalls verbunden ist. Das aus Reflexionsschicht 3 und Trittschalldämmschicht 4 bestehende Gebilde entspricht im wesentlichen sowohl aufbau- wie wirkungsmässig der in der schweizerischen Patentschrift Nr. 645 968 beschriebenen Unterlagsbahn. Die Reflexionsschicht 3 besteht aus einem die Wärmestrahlung reflektierenden Material, z.B. aus Aluminium. Als Reflexionsschicht 3 kann beispielsweise ein Polyesterträger mit einer aufgedampften Aluminiumschicht verwendet werden. Falls notwendig kann die Aluminium-Reflexionsschicht 3 durch geeignete Schutzschichten vor Oxydation und Angriffen chemischer und mechanischer Art geschützt werden.

Die Trittschalldämmschicht 4 weist eine Anzahl von geschlossenen, luftgefüllten Kammern 5 auf, die in Fig. 1 nicht im einzelnen dargestellt sind. Wie aus Fig. 2 hervorgeht, sind diese Kammern 5 in einem gegenseitigen Abstand angeordnet und bilden zwischen sich Zwischenräume 6. Die Trittschalldämmschicht 4 kann beispielsweise aus zwei Kunststoffolien bestehen, von denen die untere Folie eben ist, während die obere Folie Vertiefungen aufweist, die die Kammern 5 festlegen. Zwischen den Kammern 5, d.h. in den Zwischenräumen 6, sind die beiden Folien miteinander luftdicht verbunden.

Auf der Trittschalldämmschicht 4 liegt eine mit dieser verbundene Deckschicht 7 auf, welche aus einer Trägerschicht 8, z.B. aus Kunststoff, und einer Schicht 9 aus wärmeleitendem Material, vorzugsweise Aluminium, besteht. Diese Deckschicht 7 ist mit Löchern 10 versehen, die über die Oberfläche der Unterlagsplatte 1 gleichmässig verteilt angeordnet sind. In Fig. 1 ist nur ein Teil dieser rasterartig angeordneten Löcher 10 dargestellt.

Die Unterlagsplatte 1 kommt mit der Deckschicht 7 nach oben unter die Heizungsrohre der Fussbodenheizung zu liegen. Durch die luftgefüllten Kammern 5 und die ebenfalls mit Luft gefüllten und durch die Deckschicht 7 abgeschlossenen Zwischenräume 6 der Trittschalldämmschicht 4 wird zwischen der Reflexionsschicht 3 und den wärmeabstrahlenden Heizungsrohren bzw. der Deckschicht 7 ein Luftpolster gebildet, welches zusammen mit dem Temperaturunterschied zwischen der Reflexionsschicht 1 und der Aluminiumschicht 9 eine Voraussetzung für eine einwandfreie Reflexion der Wärmestrahlung bildet. Zusammen mit der Grundschicht 2 verhindert somit die Reflexionsschicht 3 weitgehend eine Wärmeabgabe nach unten.

Die luftgefüllten Kammern 5 wirken stoss- und schwingungsdämpfend, so dass durch die Dämmschicht 4 nicht nur eine einwandfreie Reflexion der Wärmestrahlung sichergestellt wird, sondern auch ein ausgezeichneter Trittschallschutz erhalten wird. Durch die Deckschicht 7 wird vermieden, dass beim Einbau der Werkstoff des Zementstrichs in die Zwischenräume 6 zwischen den Kammern 5 eindringen kann, was einen Verlust der Trittschalldämmwirkung zur Folge hätte. Wie bereits erwähnt, werden durch das Abschliessen der Zwischenräume 6 durch die Deckschicht 7 weitere Luftkissen erhalten, die die Kammern 5 in ihrer Wirkung unterstützen.

Die Deckschicht 7, d.h. deren Aluminiumschicht 9, dient unter anderem dazu, eine gleichmässige Wärmeverteilung zwischen den Heizungsrohren und über die ganze Oberfläche der Unterlagsplatte 1 sicherzustellen. Im weitern hat die Deckschicht 7 noch die Aufgabe, in die Löcher 10 eingesetzte Rohrhalteklemmen festzuhalten. Zu diesem Zweck sind die an sich bekannten Rohrhalteklemmen mit einem Fussteil ausgerüstet, der durch die Löcher 10 in die Deckschicht 7 eingreift. Dieser Fussteil kann beispielsweise als Rastelement ausgebildet sein, das nach dem Einsetzen in die Löcher 10 unter Rastwirkung festgehalten wird. Um zu verhindern, dass die Rohrhalteklemmen beim Verlegen der Heizungsrohre oder beim Aufbringen des Zementstrichs ausreissen können, muss diese Deckschicht 7 eine genügende mechanische Festigkeit aufweisen, die beim dargestellten Ausführungsbeispiel grösser ist als die entsprechende mechanische Festigkeit der darunterliegenden Schichten 2, 3 und 4. Diese erforderliche Festigkeit der Deckschicht 7 kann beispielsweise durch eine Aluminiumschicht 9 genügender Dicke erhalten werden, wobei in diesem Fall die Trägerschicht 8 entfallen kann. Beim gezeigten Ausführungsbeispiel ist jedoch die Aluminiumschicht 9 so dünn gewählt, dass sie allein mechanisch zu wenig widerstandsfähig ist. Aus diesem Grund ist unterhalb dieser Aluminiumschicht 9 eine versteifende Trägerschicht 8 angeordnet. Das Vorsehen einer dünnen Aluminiumschicht 9 hat den Vorteil, dass ein Zerschneiden der Unterlagsplatte ohne die Notwendigkeit von besondern Schneid- und Trennvorrichtungen möglich ist.

Die beschriebene Unterlagsplatte 1 lässt sich ohne Schwierigkeiten verlegen. In einem einzigen Arbeitsgang kann somit sowohl eine Wärmedämmschicht 2 bzw. 3 sowie eine Trittschalldämmschicht 4 und eine Wärmeverteilschicht 9 auf den Betonboden aufgelegt werden. Die Rohrhalteklemmen lassen sich ohne Schwierigkeiten und zeitsparend an der jeweils richtigen Stelle auf der Deckschicht 7 befestigen. Zusätzliche Befestigungsschienen oder Halterungen für die Rohrhalteklemmen sind demnach nicht erforderlich. Falls notwendig, kann vor dem Einsetzen der Rohrhalteklemmen auf die verlegten Unterlagsplatten 1 noch eine Abdeckfolie, z.B. eine Polyäthylenfolie, aufgebracht werden.

Obwohl die in der Zeichnung dargestellte und vorstehend beschriebene Unterlagsplatte 1 eine besonders vorteilhafte Ausführungsform darstellt, sind noch Ausführungsvarianten möglich, von denen im folgenden nur einige erwähnt werden.

Die Reflexionsschicht 3 kann auch aus einem andern geeigneten Material als aus Aluminium bestehen. Desgleichen ist es möglich, anstelle von Aluminium ein anderes geeignetes wärmeleitendes Material für die Deckschicht 7 zu verwenden.

Den Kammern 5 der Trittschalldämmschicht 4 kann eine beliebige geeignete Form gegeben werden. Zudem lassen sich diese Kammern 5 auf beliebige Weise anordnen. Unter Umständen können die Kammern 5 unter Wegfall der Zwischenräume aneinander anschliessen. Es versteht sich zudem, dass diese mit einer Anzahl von gas-, vorzugsweise luftgefüllten Kammern 5 versehene Trittschalldämmschicht 4 auf irgendeine geeignete Weise gebildet werden kann.

Es ist auch möglich, in der Deckschicht 7 nicht schon im voraus Löcher 10 für die Rohrhalteklemmen vorzusehen und letztere nach Verlegen der Unterlagsplatten 1 an der gewünschten Stelle unter gleichzeitiger Bildung eines Loches 10 in die Deckschicht 7 einzudrücken.

## Patentansprüche

1. Wärmedämmende Unterlagsplatte (1) für Fussbodenheizungen, mit einer von Rohrhalteelementen durchstossbaren Deckschicht (7), einer vorzugsweise aus Aluminium bestehenden Reflexionsschicht (3) und einer mit dieser verbundenen weiteren Schicht (4), dadurch gekennzeichnet, dass die weitere Schicht (4) eine Mehrzahl von einzelnen, geschlossenen, gasgefüllten Kammern (5) aufweist und oberhalb der Reflexionsschicht (3) angeordnet ist und die mit der weiteren Schicht (4) verbundene Deckschicht (7) plattenartig und zum Verankern der Rohrhalteelemente ausgebildet ist.

2. Unterlagsplatte nach Anspruch 1, dadurch gekennzeichnet, dass die Kammern (5) in einem gegenseitigen Abstand angeordnet sind.

3. Unterlagsplatte nach Anspruch 1 oder 2, gekennzeichnet durch eine unterhalb der Reflexionsschicht (3) angeordnete und mit dieser verbundene Grundschicht (2) aus einem thermisch isolierenden Material.

4. Unterlagsplatte nach einem der Ansprüche 1–3, dadurch gekennzeichnet, dass die Deckschicht (7) wenigstens teilweise aus einem wärmeleitenden Material, vorzugsweise Aluminium, besteht.

5. Unterlagsplatte nach Anspruch 4, dadurch gekennzeichnet, dass die Deckschicht (7) aus einer Trägerschicht (8) und aus einer Schicht (8) aus dem wärmeleitenden Material besteht.

6. Unterlagelement nach einem der Ansprüche 1–5, dadurch gekennzeichnet, dass die Deckschicht (7) mit Öffnungen (10) zum Einsetzen der Rohrhalteelemente versehen ist.

## Revendications

1. Panneau d'infrastructure (1) thermiquement isolant pour chauffage par le plancher, comportant une couche de couverture (7) que peuvent traverser des éléments supports des tubes, une couche réfléchissante (3) constituée de préférence d'aluminium et une autre couche (4) liée à celle-ci, caractérisé en ce que l'autre couche (4) présente un grand nombre de chambres (5) isolées, fermées, remplies de gaz, en ce qu'elle est disposée au-dessous de la couche réfléchissante (3) et en ce que la couche de couverture (7) reliée à l'autre couche (4) est conçue à la façon d'un panneau et pour l'ancrage des éléments supports des tubes.

2. Panneau d'infrastructure selon la revendication 1, caractérisé en ce que les chambres (5) sont disposées à une certaine distance l'une de l'autre.

3. Panneau d'infrastructure selon la revendication 1 ou la revendication 2, caractérisé par une couche de base (2), en matériau thermiquement isolant, disposée au-dessous de la couche réfléchissante (3) et liée à celle-ci.

4. Panneau d'infrastructure selon l'une des revendications 1–3, caractérisé en ce que la couche de couverture (7) est au moins partiellement constituée d'un matériau conducteur de la chaleur, de préférence d'aluminium.

5. Panneau d'infrastructure selon la revendication 4, caractérisé en ce que la couche de couverture (7) est constituée d'une couche support (8) et d'une couche (9) de matériau conducteur de la chaleur.

6. Elément d'infrastructure selon l'une des revendications 1–5, caractérisé en ce que la couche de couverture (7) est munie d'ouvertures (10) pour introduction des éléments supports des tubes.

**Claims**

1. Heat insulating support plate (1) for floor heatings, with a surface layer (7) which can be pierced by pipe fastening elements; a reflecting layer (3) preferably of aluminium and a further layer (4) connected with the reflecting layer, characterized in that the further layer (4) possesses a plurality of individual, closed gas-filled chambers (5) and is arranged above the reflecting layer (3) and the surface layer (7) connected with the further layer (4) is a plate-like element and designed for anchoring the pipe fastening elements.

2. Support plate according to claim 1, characterized in that the chambers (5) are arranged in spaced-apart relationship from each other.

3. Support plate according to claim 1 or 2, characterized by a base layer (2) of a heat insulating material arranged below and connected with the reflecting layer (3).

4. Support plate according to one of the claims 1 to 3, characterized in that the surface layer (7) consists at least partially of a heat-conductive material, preferably aluminium.

5. Support plate according to claim 4, characterized in that the surface layer (7) consists of a support layer (8) and of a layer (9) of the heat conductive material.

6. Support element according to one of the claims 1 to 5, characterized in that the surface layer (7) is provided with openings (10) for mounting the pipe fastening elements.

Fig. 1

Fig. 2